# EUROPÄISCHE PATENTSCHRIFT

(11) **EP 2 707 236 B1**
(45) Veröffentlichungstag und Bekanntmachung des Hinweises auf die Patenterteilung: **22.11.2017**
(21) Anmeldenummer: 12719602.0
(22) Anmeldetag: 08.05.2012
(51) Int. Cl.: B60G 11/23

(54) **ROTATIONSDÄMPFER**
ROTARY SHOCK ABSORBER
AMORTISSEUR ROTATIF

(30) Priorität: 12.05.2011 DE 102011101350
(43) Veröffentlichungstag der Anmeldung: 19.03.2014
(73) Patentinhaber: Audi AG, 85045 Ingolstadt (DE)
(72) Erfinder: WILLEMS, Marco, 85053 Ingolstadt (DE)
(86) Internationale Anmeldenummer: PCT/EP2012/001962
(87) Internationale Veröffentlichungsnummer: WO 2012/156039

(56) Entgegenhaltungen:
- EP-A1- 1 935 679
- DE-C- 704 373
- US-A- 2 590 711
- US-A- 4 690 069

## Beschreibung

Die Erfindung betrifft einen Rotationsdämpfer für ein Kraftfahrzeug, umfassend wenigstens ein Dämpferelement zum Dämpfen der Relativbewegung zwischen einer radaufhängungsseitig angeordneten ersten Masse und einer fahrzeugkarosserieseitig angeordneten zweiten Masse. Siehe zum Beispiel die gattungsgemäße EP-A-1935679. Es ist in vielen Bereichen der Technik erforderlich, Relativbewegungen zwischen zwei Bauteilen eines schwingungsfähigen mechanischen Systems zu dämpfen. Ein Beispiel ist die Schwingungsdämpfung an einer Kraftfahrzeugkarosserie im Bereich der Aufhängung der Karosserie am Fahrwerk. Hierzu werden beispielsweise hydraulische Lineardämpfer eingesetzt. Bei entsprechenden Lineardämpfern sind die in Kraftrichtung liegenden Anbindungspunkte an Fahrzeugkarosserie respektive Radaufhängung mit Elastomerlagern versehen, so dass eine Schwingungsentkopplung und somit eine Reduzierung von beim Betrieb des Kraftfahrzeugs, etwa durch das Abrollen eines Fahrzeugrades auf dem Untergrund, entstehenden Schwingungen erreicht wird.

Rotationsdämpfer stellen eine Alternative zu den vorgenannten Teleskopdämpfern dar und sind weithin bekannt. Die Wirkungsweise eines Rotationsdämpfers beruht prinzipiell auf einem radaufhängungsseitig angeordneten, bei einer relativen Massenbewegung bewegbaren Hebelelement, welches direkt oder indirekt mit einem drehbar gelagerten Dämpferteil des dem Rotationsdämpfer zugehörigen Dämpferelements bewegungsgekoppelt ist, wodurch das entsprechende Dämpferteil in eine Drehbewegung versetzbar ist.

Eine Schwingungsentkopplung mittels entsprechenden Elastomerlagern wie bei den vorstehend genannten Lineardämpfern ist bei Rotationsdämpfern nicht möglich, da hier eine Kraftumlenkung von einer linear wirkenden Kraft in eine lotrecht dazu verlaufende Kraft respektive ein Drehmoment erfolgt. Mithin ist das Absorptionsverhalten gängiger Rotationsdämpfer gegenüber beim Betrieb des Kraftfahrzeugs entstehenden Schwingungen insbesondere im Vergleich zu Lineardämpfern reduziert.

Der Erfindung liegt das Problem zugrunde, einen Rotationsdämpfer mit einer verbesserten Absorptionsfähigkeit gegenüber beim Betrieb des Kraftfahrzeugs entstehenden Schwingungen anzugeben.

Das Problem wird erfindungsgemäß durch einen Rotationsdämpfer nach Anspruch 1 gelöst. Das Dämpferelement weist wenigstens ein drehbares Dämpferteil auf, welches über ein mit diesem mechanisch bewegungsgekoppeltes, durch die Massenbewegung bewegbares Hebelelement in eine Drehbewegung versetzbar ist, wobei in die mechanische Bewegungskopplung zwischen Hebelelement und drehbarem Dämpferteil wenigstens ein Federdämpferelement integriert ist.

Die vorliegende Erfindung gründet auf der Idee, wenigstens einen Federdämpferelement in die mechanische Bewegungskopplung einzubringen, um so wenigstens eine Entkopplungsstufe zwischen der Fahrzeugkarosserie und der Radaufhängung zu realisieren. Mithin werden derart beim Betrieb des Kraftfahrzeugs und/oder des Rotationsdämpfers entstehende Schwingungen reduziert bzw. bedämpft, wodurch insbesondere akustisch wahrnehmbare und so den Fahrkomfort mindernde Schwingungen reduziert werden.

Das wenigstens eine Federdämpferelement ist somit direkter Bestandteil des Rotationsdämpfers, was insbesondere eine Bedämpfung entsprechender Schwingungen noch vor Ausbreitung dieser in die Fahrgastzelle, in welcher diese regelmäßig als störend wahrgenommen werden, ermöglicht. Das Federdämpferelement, welches im Sinne einer schwingungsentkoppelnden, in Serie zwischen Hebelelement und drehbarem Dämpferteil geschalteten Schnittstelle zwischen Hebelelement und drehbarem Dämpferteil zu sehen ist, erlaubt eine Übertragung einer von dem Hebelement auf das drehbare Dämpferteil zu übertragenden Kraft respektive eines Drehmoments.

Durch die Integration des Federdämpferelements in die mechanische Bewegungskopplung zwischen Hebelelement und dem dem Dämpferelement zugehörigen drehbaren Dämpferteil ist das erfindungsgemäße Prinzip zudem platzsparend und trägt den bekanntermaßen beschränkten Platzverhältnissen innerhalb eines einen entsprechenden Rotationsdämpfer aufnehmenden Radkastens Rechnung.

Das erfindungsgemäß eingesetzte Federdämpferelement kann in im Weiteren noch beschriebenen Ausführungsformen vorliegen und so individuell und bedarfsgerecht auf ein entsprechendes Frequenzspektrum an Schwingungen eingestellt sein, so dass insbesondere hochfrequente oder tieffrequente Schwingungen gezielt bedämpft werden können. Insbesondere können akustisch wahrnehmbare hochfrequente Schwingungen kleiner Amplitude bedämpft werden. Lediglich beispielhaft können mit einem entsprechend ausgeführten Federdämpferelement Schwingungen im Bereich von 1 kHz - 30 kHz bedämpft werden. Gemäß der Erfindung ist das Federdämpferelement wenigstens abschnittsweise in einem sich zwischen dem Hebelelement und dem drehbaren Dämpferteil erstreckenden Aufnahmeraum oder in einem sich zwischen dem Hebelelement und einem mit dem drehbaren Dämpferteil drehfest verbundenen Bauteil erstreckenden Aufnahmeraum angeordnet ist. Dabei sind Form und Abmessungen des Federdämpferelements in der Regel auf Form und Abmessungen des Aufnahmeraums angepasst, so dass sich eine stabile, vorzugsweise unverlierbare Anordnung des Federdämpferelements innerhalb des Aufnahmeraums ergibt.

Der Aufnahmeraum und gegebenenfalls auch das Federdämpferelement können ringförmig oder ringsegmentförmig ausgebildet sein. Entsprechend ist es bevorzugt, das Federdämpferelement ebenfalls ringförmig auszubilden, so dass dieser in den Aufnahmeraum eingesetzt den Aufnahmeraum vollständig ausfüllt. Gleichermaßen kann das Federdämpferelement auch nur als entsprechendes Ringsegment ausgebildet sein, so dass dieses, wenn eingesetzt, den Aufnahmeraum umfangsmäßig nur teilweise ausfüllt. In den nicht ausgefüllten Bereichen des ringförmigen Aufnahmeraums kann wenigstens ein weiteres ringsegmentförmiges Federdämpferelement eingesetzt sein. Das heißt, das Federdämpferelement kann auch umfangsmäßig mehrteilig ausgeführt sein und eine entsprechende Anzahl an Federdämpferelementabschnitten umfassen. Auch die Ausführungen des Federdämpferelements in Form mehrerer umfangsmäßig verteilt angeordneter Radialstege, welche sich als einzelne Federdämpferelementabschnitte radial durch den ringförmigen Aufnahmeraum erstrecken, ist denkbar. Analoges gilt selbstverständlich für einen lediglich ringsegmentförmig ausgeführten Aufnahmeraum.

Neben der beschriebenen ringförmigen respektive ringsegmentförmigen Ausführung des Aufnahmeraums können auch andere geometrische Ausführungsformen des Aufnahmeraums sowie diesem nachfolgend des Federdämpferelements oder entsprechende Federdämpferelementabschnitte denkbar sein. Hierunter fallen beispielsweise rechteckige oder polygon, das heißt etwa als Sechs- oder Achtkant, ausgebildete Aufnahmeräume.

Die Anordnung des Federdämpferelements innerhalb eines entsprechenden Aufnahmeraums kann beispielsweise durch einen Press- oder Klemmsitz des Federdämpferelements auf dem drehbaren Dämpferteil oder dem mit dem drehbaren Dämpferteil drehfest verbundenen Bauteil erfolgen. Weiterhin sind je nach Wahl der eingesetzten Materialien für das Hebelelement, das Federdämpferelement, das drehbare Dämpferteil oder gegebenenfalls das mit dem drehbaren Dämpferteil drehfest verbundene Bauteil auch Klebe-, Schweiß- oder Lötverbindungen zur Anordnung des Federdämpferelements in einem entsprechenden Aufnahmeraum denkbar. Auch radial abstehende Kraft- und/oder Formschlusselemente können entweder federdämpferlementseitig oder hebelelementseitig vorgesehen sein, welche in entsprechend gegengleich gestaltete hebelelementseitig oder federdämpferelementseitig vorgesehene Aufnahmeabschnitte eingreifen. Gleiches gilt für eine entsprechende Verbindung zwischen dem Federdämpferelement und einem oder dem mit dem drehbaren Dämpferteil drehfest verbundenen Bauteil.

Es ist ferner denkbar, dass das Federdämpferelement wenigstens zwei Federdämpferelementabschnitte aufweist, die über ein Verbindungsteil mechanisch bewegungsgekoppelt sind. Mithin kann in dieser Ausführungsform in die mechanische Bewegungskopplung zwischen Hebelelement und drehbarem Dämpferteil wenigstens ein Verbindungsteil integriert sein, an dem die Federdämpferelementabschnitte angeordnet sind, wobei beispielsweise wenigstens ein Federdämpferelementabschnitt in Kontakt zu dem Hebelelement und wenigstens ein weiterer Federdämpferelementabschnitt in Kontakt zu dem drehbaren Dämpferteil steht. Zwischen den entsprechenden Federdämpferelementabschnitten ist das, gegebenenfalls als konzentrischer Ring ausgebildete, mit den Federdämpferelementabschnitten verbundene Verbindungsteil angeordnet. Entsprechend werden Drehbewegungen des oder der radial äußeren Federdämpferelementabschnitte über das Verbindungsteil auf das oder die radial inneren Federdämpferelementabschnitte und weiter auf das drehbare Dämpferteil übertragen. Durch die mehrteilige Ausführung des Federdämpferelements in mehrere entsprechende radial beabstandete, durch wenigstens ein zwischen diesen gelagertes Verbindungsteil getrennte Federdämpferelementabschnitte ist die Möglichkeit einer mehrstufigen Entkopplung gegeben, wodurch die Absorptionsfähigkeit des Rotationsdämpfers gegenüber entsprechenden Schwingungen weiter erhöht werden kann.

Das Federdämpferelement ist vorteilhaft aus einem Elastomermaterial gebildet. Unter Elastomermaterialien sind sämtliche sowohl natürlich als auch synthetisch herstellbaren Elastomere zu verstehen. Lediglich beispielhaft werden auf Polybutadien basierende Kautschuke genannt, wobei deren Absorptionsverhalten gegenüber entsprechenden Schwingungen durch unterschiedliche Vulkanisations- bzw. Vernetzungsgrade einstellbar ist. Auch entsprechende, in einem Spritzgießverfahren verarbeitbare thermoplastische Elastomere (TPE) können zur Ausbildung des Federdämpferelements verwendet werden.

Zur weiteren Einstellung des Absorptionsverhaltens des erfindungsgemäßen Federdämpferelements kann in das Elastomermaterial wenigstens ein metallischer Träger integriert, insbesondere von diesem umhüllt bzw. umspritzt, sein. Mithin kann derart ein bestimmtes Absorptionsspektrum an weitestgehend durch das Elastomermaterial erzeugtem viskosen Materialverhalten und ein weitestgehend durch den metallischen Träger erzeugtem elastischen Materialverhalten hergestellt werden. Auch eine eine Reibdämpfung erzeugende Komponente kann ergänzend oder alternativ Bestandteil des Federdämpferelements sein, so dass dessen Dämpfwirkung grundsätzlich auf dem Prinzip der Federdämpfung und/oder Viskosendämpfung und/oder Reibdämpfung beruht.

Es ist ferner denkbar, dass zwischen dem Hebelelement und dem Dämpferelement ein Getriebe angeordnet ist, wobei wenigstens ein erstes Getriebeelement mit dem Hebelelement bewegungsgekoppelt und über dieses in eine Drehbewegung versetzbar und wenigstens ein zweites, mit dem ersten Getriebeelement direkt oder indirekt übersetzt gekoppeltes Getriebeelement mit dem zweiten Dämpferteil bewegungsgekoppelt ist, derart dass eine Drehbewegung des zweiten Dämpferteils erfolgt. Die Zwischenschaltung eines Getriebes erlaubt eine Übersetzung der Bewegung des Hebelelements, so dass vergleichsweise geringfügige Bewegungen respektive Auslenkungen des Hebelelements hohe Umdrehungen bzw. Drehgeschwindigkeiten des zweiten Dämpferteils des Dämpferelements bewirken. Entsprechen kann die Dämpfwirkung des Dämpferelements erhöht werden.

Das Getriebe kann beispielsweise in Form eines Planetengetriebes, Spannungswellengetriebes, Zykloidgetriebes oder Stirnradgetriebes ausgebildet sein. Andere Getriebebauformen sind ebenso denkbar.

Der Rotationsdämpfer kann als hydraulischer Rotationsdämpfer mit wenigstens einem hydraulischen Dämpferelement oder als elektrischer Rotationsdämpfer mit wenigstens einem elektrischen Dämpferelement ausgebildet sein. In ersterem Fall beruht die Dämpfwirkung des Dämpferelements auf der Umwälzung eines in einem dem Dämpferelement zugehörigen Volumen aufgenommenen Fluids wie z. B. eines geeigenten Hydrauliköls oder dergleichen. In letzterem Fall, kann durch das Dämpferelement eine Umwandlung von mechanischer in elektrische Energie vollzogen werden. In dieser Ausgestaltung umfasst der Rotationsdämpfer einen durch die Massenbewegung angetriebenen Generator mit einem feststehenden Stator und einem relativ dazu drehbaren Rotor sowie vorteilhaft ein mit dem Generator gekoppeltes Getriebe. Das Funktionsprinzip des elektrischen Dämpfers beruht auf der Kopplung des Generators mit dem Getriebe, wobei das Abtriebselement des Getriebes eine über das direkt mit einem Antriebselement des Getriebes gekoppelte Hebelelement eingebrachte Drehbewegung auf den Rotor überträgt. Die in den Rotor eingeleitete Rotationsbewegung bedingt die Dämpfung über den Generator sowie die Rückgewinnung bzw. Umwandlung der ursprünglich aus der Massenbewegung resultierenden mechanischen Dämpfungsenergie in den generatorseitig erzeugten Strom.

Weitere Vorteile, Merkmale und Einzelheiten der Erfindung ergeben sich aus den im Folgenden beschriebenen Ausführungsbeispielen sowie anhand der Zeichnungen. Dabei zeigen:
- Fig. 1: eine Prinzipdarstellung eines Rotationsdämpfers gemäß einer ersten beispielhaften Ausführungsform;
- Fig. 2: eine Prinzipdarstellung eines Rotationsdämpfers gemäß einer zweiten beispielhaften Ausführungsform;
- Fig. 3: eine Prinzipdarstellung eines Rotationsdämpfers gemäß einer dritten beispielhaften Ausführungsform; und
- Fig. 4: eine Prinzipdarstellung einer möglichen Verbausituation eines Rotationsdämpfers im Bereich einer Kraftfahrzeugachse.

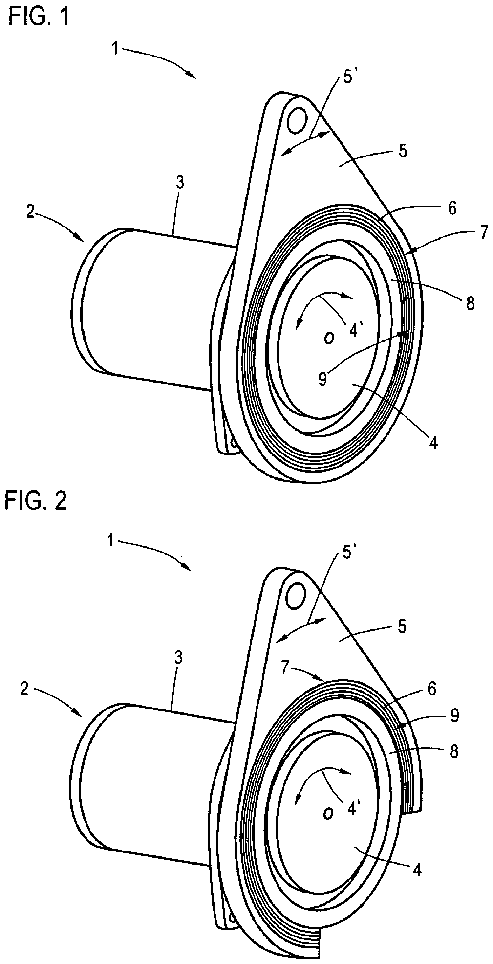

Fig. 1 zeigt eine Prinzipdarstellung eines Rotationsdämpfers 1 gemäß einer ersten beispielhaften Ausführungsform. Der Rotationsdämpfer 1 ist innerhalb eines Radkastens eines Kraftfahrzeugs (nicht gezeigt) verbaut und umfasst ein Dämpferelement 2 zum Dämpfen der Relativbewegung zwischen einer radaufhängungsseitig angeordneten ersten Masse und einer fahrzeugkarosserieseitig angeordneten zweiten Masse. Das Dämpferelement 2 kann beispielsweise als elektrischer Dämpfer ausgebildet sein.

Das Dämpferelement 2 weist innerhalb des hohlzylindrischen Gehäuses 3 ein feststehendes erstes Dämpferteil (nicht gezeigt) und ein unter Ausbildung einer Dämpfkraft relativ dazu drehbar gelagertes zweites Dämpferteil (nicht gezeigt) auf. Das zweite Dämpferteil ist über ein Umlenklager 4 mit einem durch die Massenbewegung bewegbaren bzw. verschwenkbaren (vgl. Doppelpfeil 5'), mit der ersten Masse verbundenen Hebelelement 5 (Anlenkhebel) verbunden. Das Hebelelement 5 überträgt bei einer Massenbewegung eine Drehbewegung respektive ein Drehmoment (vgl. Doppelpfeil 4') auf das Umlenklager 4 und das mit diesem bewegungsgekoppelte zweite Dämpferteil. Hierbei können akustisch wahrnehmbare Schwingungen entstehen, die bei Eintritt in die Fahrgastzelle für den Fahrgast regelmäßig als unangenehm empfunden werden.

Zur Reduzierung respektive Bedämpfung entsprechender Schwingungen ist in die mechanische Bewegungskopplung zwischen Hebelelement 5 und Umlenklager 4 respektive drehbarem Dämpferteil, das heißt in den Übertragungspfad von Hebelelement 5 und Umlenklager 4, ein Federdämpferelement 6 integriert. Das Federdämpferelement 6 dient sonach der Schwingungsentkopplung zwischen Radaufhängung und Fahrzeugkarosserie.

Das Federdämpferelement 6 ist ringförmig ausgebildet und in einem sich zwischen einer ringförmigen Ausnehmung 7 des Hebelelements 5 und dem Außenumfang eines ringförmigen, mit dem Umlenklager 4 und somit indirekt auch dem drehbaren Dämpferteil drehfest verbundenen Bauteil 8 erstreckenden, entsprechend ebenfalls ringförmigen Aufnahmeraum 9 angeordnet. Eine stabile Anordnung des Federdämpferelements 6 innerhalb des Aufnahmeraums 9 wird beispielsweise über eine Klebverbindung sichergestellt.

Das Federdämpferelement 6 ist als geschlossener Elastomerring aus einem Elstomermaterial, das heißt etwa aus einem synthetischen Kautschuk wie Styrol-Butadien-Kautschuk (SBR) gebildet. Ersichtlich kann das Federdämpferelement 6 eine rillenförmige Oberflächenstrukturierung aufweisen. In das Elastomermaterial kann zusätzlich ein metallischer Träger integriert sein, welcher das Absorptionsspektrum des Federdämpferelements 6 beeinflusst, so dass das Federdämpferelement 6 gezielt zur Bedämpfung bestimmter Frequenzen ausgebildet werden kann. Gleichermaßen wäre es auch denkbar, das Federdämpferelement 6 in mehrere innerhalb des Aufnahmeraums 9 angeordnete Federdämpferelementabschnitte aufzuteilen, so dass innerhalb des Aufnahmeraums 9 umfangsmäßig verteilt oder in einzelnen Lagen übereinander angeordnete ringsegmentförmige oder ringförmige Federdämpferelementabschnitte vorlägen, welche den Aufnahmeraum 9 vollkommen oder teilweise ausfüllten. Grundsätzlich beruht die Dämpfung des Federdämpferelements 6 auf dem Prinzip der Federdämpfung und/oder der viskosen Dämpfung und/oder der Reibdämpfung.

Es wäre gleichermaßen denkbar, das Federdämpferelement 6 direkt auf dem Außenumfang des Umlenklagers 4 anzuordnen, so dass hier theoretisch auf das mit dem Umlenklager 4 drehfest verbundene Bauteil 8 verzichtet werden könnte.

Fig. 2 zeigt eine Prinzipdarstellung eines Rotationsdämpfers 1 gemäß einer zweiten beispielhaften Ausführungsform. Der wesentliche Unterschied zu der in Fig. 1 gezeigten Ausführungsform besteht in der Form des Hebelelements 5 respektive der diesem zugehörigen das Federdämpferelement 8 aufnehmenden Ausnehmung 7, welche hier lediglich ringsegmentförmig ausgebildet ist, so dass das Hebelelement 5 insgesamt eine Klauenform aufweist. Bevorzugt umläuft die ringsegmentförmige Ausnehmung 7 einen Winkel von mehr als 180°, so dass das hier ebenfalls, jedoch nicht zwingend ringsegmentförmig ausgebildete Federdämpferelement 8 sowie das Umlenklager 4 gleichermaßen auch durch einen Formschluss in der Ausnehmung 7 gehalten werden.

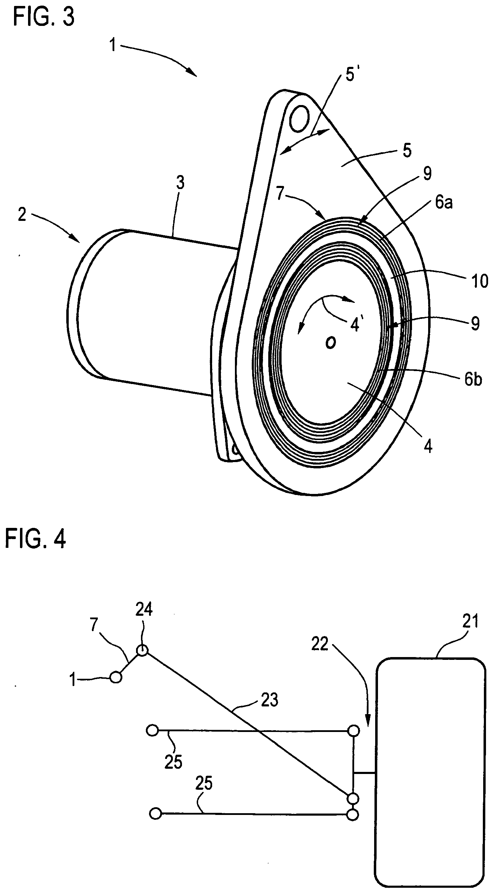

Fig. 3 zeigt eine Prinzipdarstellung eines Rotationsdämpfers 1 gemäß einer dritten beispielhaften Ausführungsform. Hier ist die Möglichkeit einer mehrstufigen Schwingungsentkopplung zwischen Radaufhängung und Fahrzeugkarosserie gezeigt, wobei das Federdämpferelement 6 zwei Federdämpferelementabschnitte 6a, 6b aufweist, die über ein ringförmiges Verbindungsteil 10 mechanisch bewegungsgekoppelt sind. Dabei entspricht der eine radial äußere Position einnehmende Federdämpferelementabschnitt 6a im Wesentlichen dem in Fig. 1 gezeigten Federdämpferelement 6. Der eine im Vergleich radial innere Position einnehmende Federdämpferelementabschnitt 6b liegt in dieser Ausführungsform direkt auf dem Außenumfang des Umlenklagers 4 auf. Selbstverständlich kann jedoch auch hier ein drehfest mit dem Umlenklager 4 verbundenes Bauteil 8 vorgesehen sein, auf dessen Außenumfang der Federdämpferelementabschnitt 6b bewegungsgekoppelt angebunden ist. Das in Fig. 3 gezeigte Prinzip lässt sich selbstverständlich auch auf ein mehr als zwei Federdämpferelementabschnitte 6a, 6b, 6i umfassendes Federdämpferelement 6 übertragen. In diesem Fall wäre selbstverständlich eine entsprechende Anzahl an Verbindungsteilen 10 vorzusehen.

Wenngleich es in den in den Fig. 1 bis Fig. 3 gezeigten Ausführungsformen nicht gezeigt ist, ist es möglich, dass zwischen dem Hebelelement 5 und dem Dämpferelement 2 ein Getriebe angeordnet ist. Dabei ist wenigstens ein erstes Getriebeelement mit dem Hebelelement 5 bewegungsgekoppelt und über das Hebelelement 5 entsprechend in eine Drehbewegung versetzbar. Ein zweites, mit dem ersten Getriebeelement direkt oder indirekt übersetzt gekoppeltes Getriebeelement wäre mit dem Umlenklager 4 respektive dem damit drehfest verbundenen drehbaren Dämpferteil bewegungsgekoppelt, derart, dass eine Drehbewegung des drehbaren Dämpferteils erfolgt.

Das Getriebe kann beispielsweise als Planetengetriebe, Spannungswellengetriebe, Zykloidgetriebe oder Stirnradgetriebe ausgebildet sein.

Fig. 4 zeigt schließlich eine Prinzipdarstellung einer möglichen Verbausituation eines Rotationsdämpfers 1 im Bereich einer Kraftfahrzeugachse. Gezeigt ist als Teil eines Kraftfahrzeugs ein Fahrzeugrad 11 nebst Radträger 12, an dem eine Schiebestange 13 angeordnet ist, welche mit dem Hebelelement 5 verbunden ist. Das Hebelelement 5 ist um die Drehachse 14 schwenkgelagert, wobei sich in der Drehachse 14 der erfindungsgemäße Rotationsdämpfer 1 befindet.

Es wäre auch denkbar, den Rotationsdämpfer 1 unmittelbar in die Drehaufhängung wenigstens eines Querlenkers 15 zu integrieren. Federt das Fahrzeugrad 11 ein oder aus, wird das Hebelelement 5 über die Schiebestange 13 bewegt und um die Drehachse 14 verschwenkt, worüber der erfindungsgemäße Rotationsdämpfer 1 betrieben wird.

## Patentansprüche

1. Rotationsdämpfer für ein Kraftfahrzeug, umfassend wenigstens ein hydraulisches oder elektrisches Dämpferelement (2) zum Dämpfen der Relativbewegung zwischen einer radaufhängungsseitig angeordneten ersten Masse und einer fahrzeugkarosserieseitig angeordneten zweiten Masse, wobei das Dämpferelement (2) wenigstens ein feststehendes Dämpferteil und wenigstens ein unter Ausbildung einer Dämpfkraft relativ zu dem feststehenden Dämpferteil drehbar gelagertes drehbares Dämpferteil aufweist, welches über ein mit diesem mechanisch bewegungsgekoppeltes, durch die Massenbewegung bewegbares Hebelelement (5) über ein Umlenklager (4) in eine Drehbewegung versetzbar ist, wobei in die mechanische Bewegungskopplung von dem Hebelelement (5) zu dem feststehenden Dämpferteil, zwischen Hebelelement (5) und drehbarem Dämpferteil, wenigstens ein Federdämpferelement (6) integriert ist,
**dadurch gekennzeichnet,**
**dass** das Federdämpferelement (6) wenigstens abschnittsweise in einem sich zwischen dem Hebelelement (5) und dem Außenumfang des Umlenklagers (4) erstreckenden Aufnahmeraum (9) oder in einem sich zwischen dem Hebelelement (5) und dem Außenumfang eines mit dem Umlenklager (4) drehfest verbundenen Bauteils (8) erstreckenden Aufnahmeraum (9) angeordnet ist.

2. Rotationsdämpfer nach Anspruch 1,
**dadurch gekennzeichnet,**
**dass** der Aufnahmeraum (9) und gegebenenfalls auch das Federdämpferelement (6) ringförmig oder ringsegmentförmig ausgebildet sind.

3. Rotationsdämpfer nach einem der vorangehenden Ansprüche,
**dadurch gekennzeichnet,**
**dass** das Federdämpferelement (6) wenigstens zwei Dämpferabschnitte (6a, 6b) aufweist, die über ein Verbindungsteil (10) mechanisch bewegungsgekoppelt sind.

4. Rotationsdämpfer nach einem der vorangehenden Ansprüche,
**dadurch gekennzeichnet,**
**dass** die Anordnung des Federdämpferelements (6) in einem entsprechenden Aufnahmeraum (9) durch einen Press- oder Klemmsitz oder durch Verkleben erfolgt.

5. Rotationsdämpfer nach einem der vorangehenden Ansprüche,
**dadurch gekennzeichnet,**
**dass** die Dämpfwirkung des Federdämpferelements (6) auf dem Prinzip der Federdämpfung und/oder viskosen Dämpfung und/oder Reibdämpfung beruht.

6. Rotationsdämpfer nach einem der vorangehenden Ansprüche,
**dadurch gekennzeichnet,**
**dass** das Federdämpferelement (6) aus einem Elastomermaterial gebildet ist.

7. Rotationsdämpfer nach Anspruch 6,
**dadurch gekennzeichnet,**
**dass** wenigstens ein metallischer Träger in das Elastomermaterial integriert, insbesondere von diesem umhüllt, ist.

8. Rotationsdämpfer nach einem der vorangehenden Ansprüche,
**dadurch gekennzeichnet,**
**dass** zwischen dem Hebelelement (5) und dem Dämpferelement ein Getriebe angeordnet ist, wobei wenigstens ein erstes Getriebeelement mit dem Hebelelement (5) bewegungsgekoppelt und über dieses in eine Drehbewegung versetzbar und wenigstens ein zweites, mit dem ersten Getriebeelement direkt oder indirekt übersetzt gekoppeltes Getriebeelement mit dem drehbaren Dämpferteil bewegungsgekoppelt ist, derart dass eine Drehbewegung des drehbaren Dämpferteils erfolgt.

9. Rotationsdämpfer nach einem Anspruch 8,
**dadurch gekennzeichnet,**
**dass** das Getriebe als Planetengetriebe, Spannungswellengetriebe, Zykloidgetriebe oder Stirnradgetriebe ausgebildet ist.

10. Rotationsdämpfer nach einem der vorangehenden Ansprüche,
**dadurch gekennzeichnet,**
**dass** er als hydraulischer Dämpfer mit wenigstens einem hydraulischen Dämpferelement oder als elektrischer Rotationsdämpfer mit wenigstens einem elektrischen Dämpferelement ausgebildet ist.

## Claims

1. Rotational damper for a motor vehicle, comprising at least one hydraulic or electric damping element (2) for damping the relative movement between a first mass arranged on the side of a wheel suspension and a second mass arranged on the side of a vehicle body, wherein the damping element (2) comprises at least one fixed damping part and at least rotatable damping part mounted so as to be rotatable relative to the fixed damping part and forming a damping force, said damping part can be put into a rotational movement via a deflection bearing (4) via a lever element (5) movable by means of the mass movement and mechanically movement-coupled to said damping part, wherein at least one spring damping element (6) is integrated into the mechanical movement coupling from the level element (5) to the fixed damping part between the lever element (5) and the rotatable damping part,
**characterised in that**
the spring damping element (6) is arranged at least in sections in a receiving area (9) extending between the lever element (5) and the outer circumference of the deflection bearing (4) or in a receiving area (9) extending between the lever element (5) and the outer circumference of a component (8) connected in a torque-proof manner to the deflection bearing (4).

2. Rotational damper according to claim 1,
**characterised in that**
the receiving area (9) and possibly also the spring damping element (6) are designed in a ring or ring-segment shape.

3. Rotational damper according to any one of the preceding claims,
**characterised in that**
the spring damping element (6) comprises at least two damping sections (6a, 6b) which are mechanically movement-coupled via a connection part (10).

4. Rotational damper according to any one of the preceding claims,
**characterised in that**
the arrangement of the spring damping element (6) in a corresponding receiving area (9) is carried out by press fit or force fit or by adherence.

5. Rotational damper according to any one of the preceding claims,
**characterised in that**
the damping effect of the spring damping element (6) is based on the principle of spring damping and/or viscous damping and/or frictional damping.

6. Rotational damper according to any one of the preceding claims,
**characterised in that**
the spring damping element (6) is formed by an elastomer material.

7. Rotational damper according to claim 6,
**characterised in that**
at least one metallic carrier is integrated into the elastomer material, in particular it is enclosed by the elastomer material.

8. Rotational damper according to any one of the preceding claims,
**characterised in that**
a gear mechanism is arranged between the lever element (5) and the damping element, wherein at least one first gear element is movement-coupled to the lever element (5) and can be put into a rotational movement via said lever element and at least one second gear element coupled directly or indirectly in a transmitted manner to the first gear element is movement-coupled to the rotatable damping part such that a rotational movement of the rotatable damping part takes place.

9. Rotational damper according to claim 8,
**characterised in that**
the gear mechanism is designed as a planetary gear mechanism, strain wave gear mechanism, cycloid gear mechanism or a spur gear mechanism.

10. Rotational damper according to any one of the preceding claims,
**characterised in that**
it is designed as a hydraulic damper with at least one hydraulic damping element or as an electric rotational damper with at least one electric damping element.

## Revendications

1. Amortisseur rotatif pour un véhicule automobile, comprenant au moins un élément amortisseur (2) hydraulique ou électrique afin d'amortir le mouvement relatif entre une première masse agencée du côté de la suspension de roue et une deuxième masse agencée du côté de la carrosserie de véhicule,
dans lequel l'élément amortisseur (2) comporte au moins une partie d'amortisseur fixe et au moins une partie d'amortisseur rotative montée de manière à pouvoir tourner par rapport à la partie d'amortisseur fixe en créant une force d'amortissement, laquelle partie d'amortisseur rotative peut être mise en rotation par l'intermédiaire d'un palier de renvoi (4) et par l'intermédiaire d'un levier (5) couplé mécaniquement quant au mouvement avec ladite partie d'amortisseur rotative et déplaçable par le mouvement de masse,
et dans lequel au moins un élément amortisseur à ressort (6) est intégré dans le couplage de mouvement mécanique du levier (5) à la partie d'amortisseur fixe, entre levier (5) et partie d'amortisseur rotative,
**caractérisé en ce que** l'élément amortisseur à ressort (6) est agencé au moins en partie dans un espace de logement (9) qui s'étend entre le levier (5) et la circonférence extérieure du palier de renvoi (4) ou dans un espace de logement (9) qui s'étend entre le levier (5) et la circonférence extérieure d'une pièce (8) reliée de manière solidaire en rotation au palier de renvoi (4).

2. Amortisseur rotatif selon la revendication 1, **caractérisé en ce que** l'espace de logement (9) et le cas échéant aussi l'élément amortisseur à ressort (6) sont réalisés en forme d'anneau ou de segment d'anneau.

3. Amortisseur rotatif selon l'une des revendications précédentes, **caractérisé en ce que** l'élément amortisseur à ressort (6) comporte au moins deux parties d'amortisseur (6a, 6b) qui sont couplées mécaniquement quant au mouvement par l'intermédiaire d'une pièce de liaison (10).

4. Amortisseur rotatif selon l'une des revendications précédentes, **caractérisé en ce que** l'agencement de l'élément amortisseur à ressort (6) dans un espace de logement (9) correspondant s'effectue par ajustage serré ou par collage.

5. Amortisseur rotatif selon l'une des revendications précédentes, **caractérisé en ce que** l'action d'amortissement de l'élément amortisseur à ressort (6) repose sur le principe de l'amortissement par ressort et/ou de l'amortissement visqueux et/ou de l'amortissement par frottement.

6. Amortisseur rotatif selon l'une des revendications précédentes, **caractérisé en ce que** l'élément amortisseur à ressort (6) est en un matériau élastomère.

7. Amortisseur rotatif selon la revendication 6, **caractérisé en ce qu'**au moins un support métallique est intégré dans le matériau élastomère, en particulier est enveloppé par celui-ci.

8. Amortisseur rotatif selon l'une des revendications précédentes, **caractérisé en ce qu'**une transmission est agencée entre le levier (5) et l'élément amortisseur, au moins un premier élément de transmission étant couplé quant au mouvement avec le levier (5) et pouvant être mis en rotation par l'intermédiaire de celui-ci et au moins un deuxième élément de transmission, couplé avec le premier élément de transmission directement ou indirectement avec un certain rapport, étant couplé quant au mouvement avec la partie d'amortisseur rotative de manière à produire un mouvement de rotation de la partie d'amortisseur rotative.

9. Amortisseur rotatif selon la revendication 8, **caractérisé en ce que** la transmission est conçue comme un engrenage planétaire, un engrenage à ondes de contrainte, un engrenage cycloïde ou un engrenage droit.

10. Amortisseur rotatif selon l'une des revendications précédentes, **caractérisé en ce qu'**il est conçu comme un amortisseur hydraulique avec au moins un élément amortisseur hydraulique ou comme un amortisseur rotatif électrique avec au moins un élément amortisseur électrique.
